# EUROPÄISCHE PATENTSCHRIFT

(11) **EP 2 494 678 B1**
(45) Veröffentlichungstag und Bekanntmachung des Hinweises auf die Patenterteilung: **07.06.2017**
(21) Anmeldenummer: 10775752.8
(22) Anmeldetag: 21.10.2010
(51) Int. Cl.: H02K 1/27

(54) **ELEKTRISCHE ANTRIEBSMASCHINE FÜR EIN FAHRZEUG**
ELECTRICAL DRIVE MOTOR FOR A VEHICLE
MOTEUR D'ENTRAÎNEMENT ÉLECTRIQUE POUR VÉHICULE

(30) Priorität: 28.10.2009 DE 102009050991
(43) Veröffentlichungstag der Anmeldung: 05.09.2012
(73) Patentinhaber: Bayerische Motoren Werke Aktiengesellschaft, 80809 München (DE)
(72) Erfinder: MERWERTH, Joerg, 85221 Dachau (DE); HALBEDEL, Jens, 82178 Puchheim (DE); SCHLANGEN, Günter, 86916 Kaufering (DE)
(86) Internationale Anmeldenummer: PCT/EP2010/065844
(87) Internationale Veröffentlichungsnummer: WO 2011/051153

(56) Entgegenhaltungen:
- DE-A1-102005 041 630
- JP-A- 2004 104 962
- JP-A- 2006 121 765
- US-A1- 2009 224 624

## Beschreibung

Die Erfindung betrifft eine elektrische Antriebsmaschine für ein Fahrzeug, insbesondere für ein Kraftfahrzeug, die einen Stator und einen Rotor mit zumindest einem Polpaar umfasst, wobei jeder Pol eines jeweiligen Polpaars eine Magnetanordnung mit zumindest einer vergrabenen Magnetlage umfasst, wobei in jedem Pol eine Anzahl an Magnetfluss-Beeinflussungs-Gruppen mit jeweils einer Anzahl an Luft-gefüllten Aussparungen vorgesehen ist, welche keinem Magnet einer jeweiligen Magnetlage zwecks Flussleitung zugeordnet sind. Insbesondere betrifft die Erfindung permanenterregte Synchronmaschinen.

Als elektrische Antriebsmaschinen werden häufig permanenterregte Synchronmaschinen mit einer starker magnetischen Unsymmetrie im Rotor verwendet, siehe etwa JP 2006 121765 A. Derartige Antriebsmaschinen werden z.B. als Traktionsantrieb in Kraftfahrzeugen eingesetzt. Durch die bei diesen Antriebsmaschinen auftretende cifferenz zwischen einer Längsinduktivität Ld in Richtung der Magnete (d.h in Polrichtung oder entlang der sog. d-Achse) und einer Querinduktivität Lq quer zur Polrichtung (d.h. entlang der sog. q-Achse) entsteht bei entsprechender Ansteuerung der Antriebsmaschine ein sog. Reluktanzmoment. Dieses zusätzliche Drehmoment wirkt neben dem durch den permanentmagnetischen Fluss erzeugten Moment.

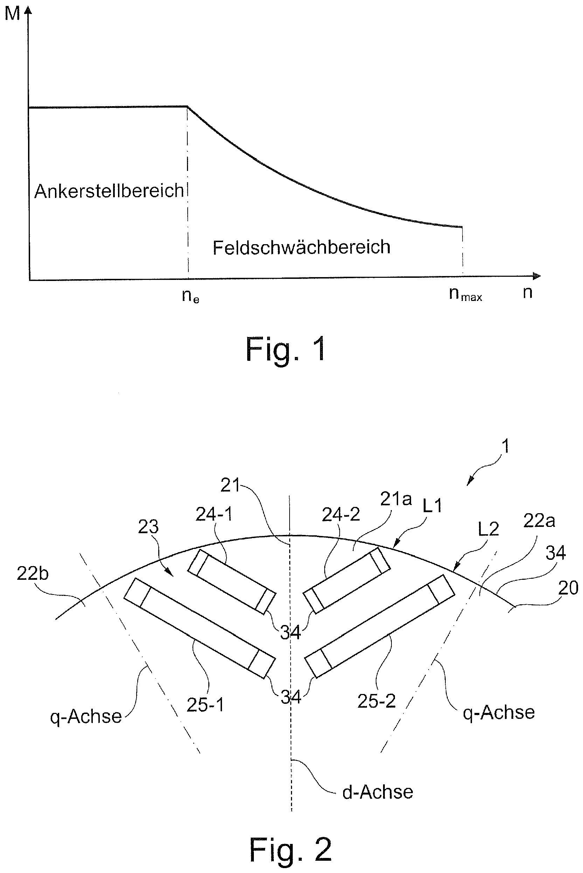

Nach dem Stand der Technik (z.B. E. Bolte, Elektrische Maschinen, Springer Verlag 2012) können permanenterregte Synchronmaschinen mit einer großen magnetischen Unsymmetrie in einem großen Bereich konstanter Leistung betrieben werden. Dieser Bereich wird als sog. Feldschwächbereich bezeichnet. Bei Traktionsantrieben besteht der Wunsch, dass das Verhältnis einer Maximaldrehzahl nₘₐₓ zu einer sog. Eckdrehzahl nₑ sehr groß ist. Die Eckdrehzahl nₑ liegt an der Grenze des Feldschwächbereichs zum Ankerstellbereich. Dieser prinzipiell bekannte Sachverhalt ist beispielhaft in Fig. 1 dargestellt. Insbesondere im Feldschwächbereich wird durch die magnetische Unsymmetrie des Ro tors und den im Stator fließenden Feldschächestrom (sog. d-Strom) neben dem ebenfalls vorhandenen sog. q-Strom ein zusätzliches Moment erzeugt, welches in der Antriebsmaschine verteilhaft ausgenutzt werden kann.

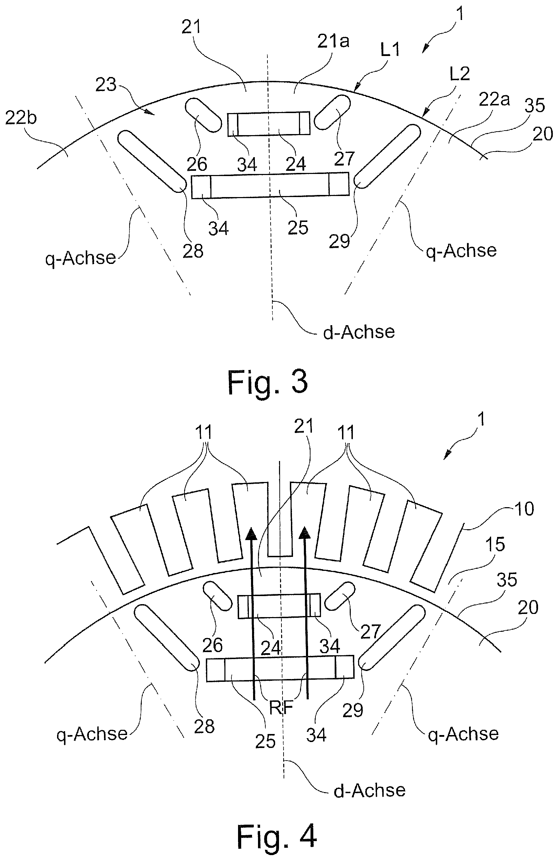

Die magnetische Unsymmetrie im Rotor der elektrischen Antriebsmaschine resultiert aus dem konstruktiven Aufbau der Magnetanordnung mit der zumindest einen vergrabenen Magnetlage. Die Figuren 2 und 3 zeigen hierbei aus dem Stand der Technik prinzipiell bekannte Anordnungen, bei denen beispielhaft jeweils zwei Magnetlagen übereinander (d.h. übereinander in radialer Richtung) in dem Rotor angeordnet sind. Die Figuren 2 und 3 zeigen dabei jeweils die Magnetanordnung 23 eines Pols 21 a eines Polpaars. Die in den Figuren dargestellten Magnetanordnungen können in Rotoren mit einem einzigen oder einer Mehrzahl an Polpaaren vorgesehen sein.

Fig. 2 zeigt eine sog. V-Magnetanordnung. Dabei sind in einer ersten Magnetlage L1 ein erster Magnet 24-1 und ein zweiter Magnet 24-2 in V-Form in dem Rotor 20 angeordnet. In radialer Richtung unterhalb der Magnetlage L1 sind in einer weiteren Magnetlage L2 ein erster Magnet 25-1 und ein zweiter Magnet 25-2, ebenfalls in V-Form, angeordnet. Grundsätzlich ist eine größere Anzahl an Magnetlagen möglich, wobei der Anzahl aus Gründen der Fertigung und Realisierbarkeit Grenzen gesetzt sind. In der Praxis sind selten mehr als drei Magnetlagen realisiert. Die Magnete 24-1, 24-2, 25-1, 25-2 sind dabei in gestanzte Aussparungen 34 des sog. Rotoreisens des Rotors 20 eingebracht. Die Aussparungen 34 sind üblicherweise durch einen Stanzvorgang in das Rotoreisen eingebracht, welches seinerseits aus einer Mehrzahl an Metallblechen besteht. Die ersten und zweiten Magnete 24-1, 25-1 bzw. 24-2, 25-2 sind dabei bezüglich der sog. d-Achse symmetrisch angeordnet. Die sog. q-Achse stellt eine Querachse zur d-Achse dar und verläuft quer zur Polrichtung (d.h. quer zur d-Achse).

Fig. 3 zeigt die Magnetanordnung 23 als sog. Parallelmagnetanordnung mit zusätzlichen Luftkavernen. In der ersten Magnetlage L1 ist symmetrisch bezüglich der d-Achse ein Magnet 24 angeordnet, der in eine Aussparung 34 des Rotoreisens eingebracht ist. An den gegenüberliegenden Enden des Magneten 24 ist jeweils eine Luftkaverne 26, 27 vorgesehen, welche bekanntermaßen zur Leitung des Magnetflusses dient. Die Luftkavernen 26, 27 stellen Luft-gefüllte Aussparungen in dem Rotoreisen dar. In entsprechender Weise umfasst eine zweite Magnetlage L2 einen bezüglich der d-Achse symmetrisch angeordneten Magneten 25, der in der Aussparung 34 angeordnet ist. An den gegenüberliegenden Enden des Magneten 25 sind Luftkavernen 28, 29 angeordnet.

In den in den Figuren 2 und 3 gezeigten Ausführungsbeispielen bildet die zweite Magnetlage L2 die unterste Magnetlage, welche abschnittsweise an einem zu dem Pol 21a benachbarten Pol 22a, 22b zum Liegen kommt.

Bekanntermaßen enthält der im Stator der Antriebsmaschine (in den Figuren 2 und 3 nicht dargestellt) fließende Strom im Feldschwächbereich eine nennenswerte d-Komponente. Das von diesem Stromanteil erzeugte Magnetfeld wirkt dem Feld der Permanentmagneten entgegen. In der Regel wird jedoch nicht die Flussdichte im Magnetmaterial reduziert. Vielmehr wird der magnetische Fluss aus dem Stator verdrängt. Der magnetische Fluss sucht sich einen Weg entlang eines zwischen dem Stator und dem Rotor gebildeten Luftspalts im Rotoreisen der Antriebsmaschine. Die dabei in seinem Weg befindlichen Engstellen, die sog. Magnettaschen, bewirken in Verbindung mit dem Strom des Stators, dass der Weg des magnetischen Flusses mehrfach zwischen dem Rotor und dem Stator hin und her wechselt. In den Zähnen des Stators kommt es damit zu Flussdichteschwankungen, deren Frequenz erheblich über der Grundfrequenz der elektrischen Antriebsmaschine liegt. Dies führt zu stark erhöhten Eisenverlusten und damit zu einer beträchtlichen Reduzierung des Wirkungsgrads der Maschine. Dieser Effekt tritt insbesondere im Feldschwächbereich auf, für den die Maschinen aufgrund ihrer Betriebskennlinien (vgl. Fig. 1) optimiert sein sollen.

Eine bekannte Möglichkeit, die Flussdichteschwankungen zwischen Rotor und Stator zu unterbinden, besteht darin, die Engstellen, welche im Weg des magnetischen Flusses auftreten, zu vergleichmäßigen. Dies kann dadurch realisiert werden, dass die Anzahl der Magnetlagen erhöht wird. Allerdings ist dies fertigungstechnisch nicht praktikabel, da die Magnete dann sehr dünn werden. Hierdurch ist die Gefahr des Brechens der Magnete beim Einbringen in ihre Aussparungen hoch. Dadurch steigen die Fertigungskosten stark an.

Der Weg des magnetischen Flusses ohne Feldschwächstrom sowie bei Feldschwächung ist für die Magnetanordnung gemäß Fig. 3 in den Figuren 4 und 5 dargestellt. Der magnetische Fluss ist hierbei jeweils mit RF gekennzeichnet. Zusätzlich ist jeweils ein dem Pol 21 gegenüberliegender Ausschnitt des Rotors 10 dargestellt. Der Rotor 10 weist in bekannter Weise eine Anzahl von Nuten 11 auf, in welche Wicklungen 12 (nur in Fig. 5 dargestellt) zur Stromführung eingebracht sind. Der Stator 10 ist beabstandet zu dem Rotor 20 angeordnet, wodurch ein Luftspalt 15 zwischen den beiden Komponenten ausgebildet ist.

Ein solcher Luftspalt kann dem Stand der Technik beispielsweise anhand der Schrift DE102005041630A1 entnommen werden. Diese Schrift beschreibt zum Zwecke der Reduzierung der Drehmomentwelligkeit der Antriebsmaschine einen Rotor und einen Stator derart, dass sich zwischen dem Stator und dem Rotor ein Luftspalt befindet, wobei der Stator zum Luftspalt weisende Zähne mit zwischen den Zähnen liegenden Nuten aufweist. Der Rotor weist bezüglich seines Querschnitts mehrere Bereiche mit jeweils mehreren im Wesentlichen sehnenförmig oder bogenförmig verlaufenden Schlitzen auf, wobei jeder Schlitz im Rotor bezüglich der Nuten des Stators so angeordnet ist, dass die eine Endseite der Schlitze eines Bereichs gegenüber den Nuten des Stators steht, während die andere Seite der Schlitze dieses Bereichs gegenüber den Zähnen des Stators steht.

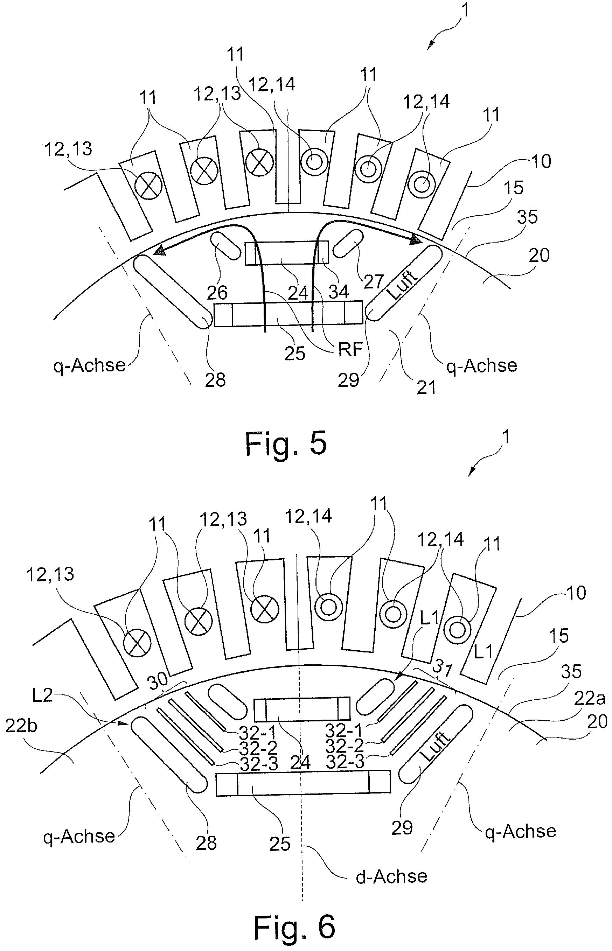

Fig. 4 zeigt die Situation, in welcher kein Feldschwächstrom im Stator 10 fließt. Der magnetische Fluss RF erstreckt sich damit parallel zur d-Achse vom Rotor 20 in Richtung des Stators 10. In Fig. 5 wird eine Feldschwächung durch das Fließen eines d-Stroms in den Wicklungen 12 bewirkt. Der magnetische Fluss RF wird durch den Feldschwächstrom aus dem Stator 10 verdrängt und sucht sich einen Weg entlang des Luftspalts 15 im Rotoreisen des Rotors 20 der Antriebsmaschine. Die mit dem Bezugszeichen 13 gekennzeichneten Wicklungen tragen einen Strom, der in die Blattebene hinein fließt. Die mit dem Bezugszeichen 14 gekennzeichneten Wicklungen 12 tragen einen Strom, der aus der Blattebene heraus fließt. In der Zeichnung ist der reine d-Strom zur Verdeutlichung des Sachverhalts dargestellt. Im Normalbetrieb fließt auch immer ein q-Strom, der in der Figur nicht dargestellt ist.
Es ist Aufgabe der vorliegenden Erfindung, eine elektrische Antriebsmaschine für ein Fahrzeug, insbesondere ein Kraftfahrzeug als Traktionsantrieb zu schaffen, welche beim Betrieb im Feldschwächbereich einen verbesserten Wirkungsgrad aufweist.
Diese Aufgabe wird gelöst durch eine Antriebsmaschine gemäß den Merkmalen des Patentanspruchs 1. Vorteilhafte Ausgestaltungen ergeben sich aus den abhängigen Patentansprüchen.
Die Erfindung schafft eine elektrische Antriebsmaschine für ein Fahrzeug, insbesondere ein Kraftfahrzeug, welche einen Stator und einen Rotor mit zumindest einem Polpaar umfasst. Jeder Pol eines jeweiligen Polpaars umfasst eine Magnetanordnung mit zumindest einer vergrabenen Magnetlage, wobei in jedem Pol eine Anzahl an Magnetfluss-Beeinflussungs-Gruppen mit jeweils einer Anzahl an Luft-gefüllten Aussparungen vorgesehen ist, welche keinem Magneten einer jeweiligen Magnetlage zwecks Flussleitung zugeordnet sind. Erfindungsgemäß grenzt eine Magnetlage der Magnetanordnung eines ersten Pols zumindest abschnittsweise an einen zweiten Pol angrenzt, wobei jeweils eine Magnetfluss-Beeinflussungs-Gruppe zwischen dieser Magnetlage und dem zweiten Pol vorgesehen ist.
Durch die Magnetfluss-Beeinflussungs-Gruppen kann der magnetische Widerstand entlang des Luftspalts im Rotoreisen der Maschine auf einfache und kostengünstige Weise vergleichmäßigt werden. Durch das Einbringen der Anzahl an Magnetfluss-Beeinflussungs-Gruppen lassen sich die magnetischen Flussdichteschwankungen in den Zähnen eines Stators unterdrücken oder zumindest verringern. Hierdurch werden die auftretenden Eisenverluste, vor allem im Feldschwächbereich, start reduziert. Im Ergebnis wird ein Hin- und Herwechseln des Magnetflusses zwischen Rotor und Stator der Antriebsmaschine unterbunden.

Das Vorsehen einer Anzahl an Magnetfluss-Beeinflussungs-Gruppen kann bei einer beliebigen Anzahl von Magnetlagen in dem Pol des Rotors realisiert werden. Das erfindungsgemäße Vorgehen ist flexibel für eine Vielzahl von konstruktiv unterschiedlichen elektrischen Antriebsmaschinen einsetzbar. Ebenso lässt sich die Anzahl an Magnetfluss-Beeinflussungs-Gruppen unabhängig von der Anzahl der Polpaare in dem Rotor der Antriebsmaschine realisieren.

Die erfindungsgemäße Antriebsmaschine lässt sich kostengünstig bereitstellen, da die Aussparungen im Zuge eines ohnehin vorgesehenen Stanzprozesses zur Herstellung des Rotoreisens eingebracht werden können und keine zusätzlichen Bearbeitungsschritte erforderlich sind. Insgesamt führt die vorgeschlagene Maßnahme zu einer Zunahme des Wirkungsgrads, insbesondere bei hohen Drehzahlen, in dem die elektrische Antriebsmaschine im Feldschwächbetrieb betrieben wird. Wird eine derartige Antriebsmaschine als Hauptantrieb eines batterieelektrischen Fahrzeugs eingesetzt, so führt dies bei Verwendung einer gegebenen Batterie mit vorgegebenem Energieinhalt zu einer erhöhten Reichweite. Da batteriebetriebene Fahrzeuge generell in ihrer Reichweite eingeschränkt sind, wird hierdurch ein erheblicher Kundennutzen erzielt. Demgegenüber kann bei Beibehaltung einer gegebenen Reichweite eines Batteriefahrzeugs die benötigte Batteriekapazität reduziert werden. In diesem Fall lässt sich ein Fahrzeug mit reduzierten Kosten bereitstellen, da der elektrische Batteriespeicher zum gegenwärtigen Zeitpunkt den größten Kostenpunkt des Fahrzeugs darstellt.

Zweckmäßigerweise ist die Anzahl an Luft-gefüllten Aussparungen schlitzförmig ausgebildet. Hierdurch ist sichergestellt, dass die Magnetfluss-Beeinflussungs-Gruppen eine möglichst geringe Auswirkung auf die q-Induktivität (d.h. die entlang der q-Achse wirkende Induktivität) sowie das Feld der Antriebsmaschine negativ beeinflusst werden.

Gemäß einer weiteren zweckmäßigen Ausgestaltung weist die Anzahl an Luft-gefüllten Aussparungen ein erstes Ende auf, das jeweils benachbart zu einer Außenumfangsfläche des Rotors angeordnet ist. Hierdurch wird im Bereich des Luftspalts der zwischen den Luft-gefüllten Aussparungen und der Außenumfangsfläche verbleibende Bereich minimiert, wodurch die magnetische Flussdichteschwankung in den Statorzähnen unterdrückt bzw. verringert werden kann. Insbesondere ist in diesem Zusammenhang vorgesehen, dass der Abstand des ersten Endes einer jeweiligen Luft-gefüllten Aussparung zu der Außenumfangsfläche des Rotors in etwa gleich ist. Alternativ können zumindest manche der ersten Enden einer jeweiligen Luft-gefüllten Aussparung an die Außenumfangsfläche des Rotors angrenzen. Diese Aussparungen sind somit als Nuten ausgebildet.
Gemäß einer weiteren Ausgestaltung weisen die Luft-gefüllten Aussparungen ein zweites Ende auf, das in Richtung einer d-Achse des jeweiligen Pols orientiert ist. Hierdurch wird ein zumindest abschnittsweise annähernd paralleler Verlauf der Luft-gefüllten Aussparungen zu einer zur d-Achse quer orientierten q-Achse erzielt. Die Orientierung der Aussparungen ist somit derart, dass diese eine möglichst geringe Auswirkung auf die q-Induktivität haben, wodurch das Feld der Permanentmagneten nicht negativ beeinflusst wird.
Eine weitere zweckmäßige Ausgestaltung sieht vor, dass die Anzahl an Luft-gefüllten Aussparungen einer Magnetfluss-Beeinflussungs-Gruppe parallel oder in einem Winkel zueinander angeordnet ist. Auch diese Ausgestaltung dient dem Zweck, die Auswirkungen auf die q-Induktivität gering zu halten und das Feld der Permanentmagneten nicht negativ zu beeinflussen.
Es ist weiterhin zweckmäßig, wenn die Anzahl an Luft-gefüllten Aussparungen einer Magnetfluss-Beeinflussungs-Gruppe eine gleiche oder eine unterschiedliche Länge aufweist. Auch hierdurch wird der Verlauf des Magnetflusses durch die Luft-gefüllten Aussparungen nicht nachteilig beeinflusst, wobei jedoch die Vorteile des erhöhten Wirkungsgrads sowie die Verringerung der Eisenverluste erzielt werden.
Alternativ oder zusätzlich ist bei einer Mehrzahl an radial übereinander angeordneten Magnetlagen in einem Pol zwischen zwei Allagnetiagen und benachbart zu der Außenumfangsfläche des Rotors jeweils eine der Magnetfluss-Beeinflussungs-Gruppen angeordnet.

In einer weiteren konkreten Ausgestaltung ist an den gegenüberliegenden Enden eines Magneten einer Magnetlage jeweils eine Luftkaverne zur Flussleitung angeordnet, wobei eine jeweilige Magnetfluss-Beeinflussungs-Gruppe zwischen den Luftkavernen zweier übereinander angeordneter Magnetlagen angeordnet ist. Mit zunehmender Anzahl an Magnetlagen ist somit auch eine erhöhte Anzahl an Magnetfluss-Beeinflussungs-Gruppen je Pol in einer Antriebsmaschine vorgesehen.

Gemäß einer weiteren zweckmäßigen Ausgestaltung sind ein erster und ein zweiter Magnet einer jeweiligen Magnetlage in V-Form in dem Rotor angeordnet, wobei eine jeweilige Magnetfluss-Beeinflussungs-Gruppe zwischen den ersten Magneten zweier übereinander angeordneter Magnetlagen und zwischen den zweiten Magneten der zwei übereinander angeordneten Magnetlagen angeordnet ist.

Die Antriebsmaschine ist bevorzugt als permanenterregte Synchronmaschine ausgebildet. Die in dem Rotor der erfindungsgemäßen Antriebsmaschine vorgesehenen, vergrabenen Magnete sind bevorzugt Permanentmagnete.

Die Erfindung wird nachfolgend näher anhand der Figuren erläutert. Es zeigen:
- Fig. 1: den aus dem Stand der Technik bekannten Zusammenhang zwischen dem Drehmoment und der Drehzahl einer permanenterregten Synchronmaschine,
- Fig. 2: eine aus dem Stand der Technik bekannte Rotoranordnung mit zwei vergrabenen Magnetlagen gemäß einer ersten Variante,
- Fig. 3: eine aus dem Stand der Technik bekannte Rotoranordnung mit zwei vergrabenen Magnetlagen gemäß einer zweiten Variante,
- Fig. 4: den Verlauf des magnetischen Flusses in einem Pol des Rotors ohne Strom im Stator bei der Rotoranordnung gemäß Fig. 3,
- Fig. 5: den Verlauf des magnetischen Flusses in einem Pol des Rotors bei Feldschwächung durch einen in dem Stator eingeprägten Feldschwächstrom bei der Rotoranordnung gemäß Fig. 3,
- Fig. 6: einen Pol eines Rotors einer erfindungsgemäßen elektrischen Antriebsmaschine gemäß einer ersten Ausführungsvariante, und

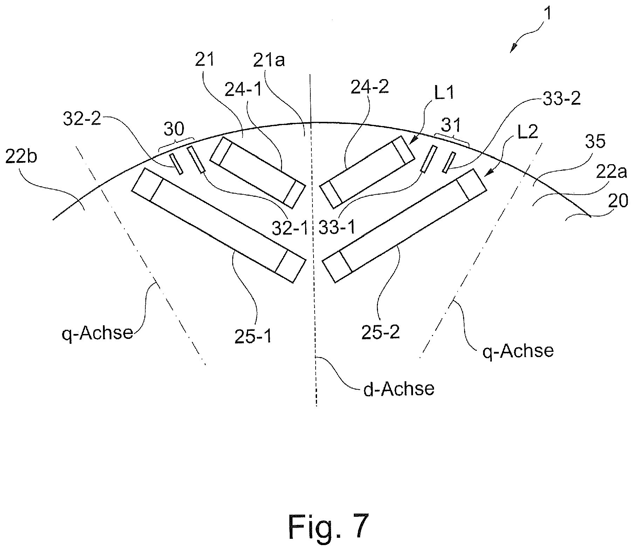

- Fig. 7: einen Pol eines Rotors einer erfindungsgemäßen elektrischen Antriebsmaschine gemäß einer zweiten Ausführungsvariante.

Die in Fig. 6 dargestellte, erfindungsgemäße elektrische Antriebsmaschine 1 basiert auf der bereits in Verbindung mit Fig. 3 beschriebenen Variante der sog. Parallelmagnetanordnung einer Anzahl an Magnetlage L1, L2 in einem Rotor 20. Zusätzlich zu den in Fig. 3 und 5 bereits beschriebenen Elementen, sind in dem Rotor 20 zwei Magnetfluss-Beeinflussungs-Gruppen 30, 31 vorgesehen. Jede der Magnetfluss-Beeinflussungs-Gruppen 30, 31 umfasst eine Anzahl an Luft-gefüllten Aussparungen. Im Ausführungsbeispiel weist jede der beiden Magnetfluss-Beeinflussungs-Gruppen 30, 31 beispielhaft drei Luft-gefüllte Aussparungen 32-1, 32-2, 32-3 bzw. 33-1, 33-2 und 33-3 auf. Die Aussparungen einer jeweiligen Magnetfluss-Beeinflussungs-Gruppe 30, 31 sind schlitzförmig ausgebildet. Die Magnetfluss-Beeinflussungs-Gruppe 30 ist zwischen den Luftkavernen 26, 28 der Magnetlagen L1, L2 angeordnet. Die Magnetfluss-Beeinflussungs-Gruppe 31 ist korrespondierend zwischen der Luftkaverne 27 der Magnetlage L1 und der Luftkaverne 29 der Magnetlage L2 angeordnet. Ein jeweiliges erstes Ende einer jeweiligen Luft-gefüllten Aussparung 32-1, 32-2, 32-3 der Gruppe 30 sowie 33-1, 33-2, 33-3 der Gruppe 31 ist benachbart zu einer Außenumfangsfläche 35 des Rotors 20 angeordnet. Dabei ist der Abstand des ersten Endes einer jeweiligen Luft-gefüllten Aussparung zu der Außenumfangsfläche des Rotors in etwa gleich. Ein jeweiliges zweites Ende der Luft-gefüllten Aussparungen ist in Richtung der d-Achse des Pols 21 a orientiert. Die Anzahl an Luft-gefüllten Aussparungen 32-1, 32-2, 32-3 der Gruppe 30 sowie der Aussparungen 33-1, 33-2, 33-3 der Gruppe 31 sind parallel zueinander angeordnet, wobei die Aussparungen einer jeweiligen Gruppe eine unterschiedliche Länge aufweisen. Hierdurch ist sichergestellt, dass die Luft-gefüllten Aussparungen eine möglichst geringe Auswirkung auf die q-Induktivität haben, wodurch das Feld der Magneten 24, 25 nicht negativ beeinflusst wird.

Durch die zwischen den Luftkavernen benachbarter Magnetlagen vorgesehenen Luft-gefüllten Aussparungen lassen sich die magnetischen Flussdichteschwankungen in den Statorzähnen unterdrücken oder zumindest verringern. Hierdurch werden die auftretenden Eisenverluste, vor allem im Feldschwächbereich, stark reduziert. Dies führt insbesondere bei hohen Drehzahlen zu einer Zunahme des Wirkungsgrads der elektrischen Antriebsmaschine. Das Einbringen der Aussparungen kann im Rahmen des Stanzens der Aussparungen 24, 25 sowie der Luftkavernen 26, 27, 28 erfolgen, so dass kein zusätzlicher Fertigungsschritt erforderlich ist. Die Fertigungskosten werden deshalb durch die vorgeschlagene Veränderung des Rotors nicht in nachteiliger Weise beeinflusst.

Entgegen der zeichnerischen Darstellung in Fig. 6 könnte jeweils zwischen der Luftkaverne 28 und der q-Achse zum Pol 22b sowie zwischen der Luftkaverne 29 und der q-Achse zum benachbarten Pol 22a eine weitere Magnetfluss-Beeinflussungs-Gruppe mit jeweils einer Anzahl an Luft-gefüllten Aussparungen vorgesehen sein. Hierdurch könnte im Randbereich eines jeweiligen Pols die Beeinflussung des Magnetfelds in der oben beschriebenen Weise ebenfalls verbessert werden.

Die Aussparungen 32-1, 32-2, 32-3 der Gruppe 30 sowie die Aussparungen 33-1, 33-2, 33-3 der Gruppe 31 sind im Wesentlichen parallel zu den benachbarten Luftkavernen 26, 28 bzw. 27, 29 angeordnet. Korrespondierend zur Größe der Luftkavernen 26, 27 der Magnetlage L1 vergrößert sich die Länge der Aussparungen mit zunehmender Annäherung an die Luftkavernen 28, 29 der Magnetlage L2. Hierdurch wird der magnetische Fluss, welcher sich von dem Magnet 25 gekrümmt durch die Magnetfluss-Beeinflussungs-Gruppen 30, 31 hindurch erstreckt, nicht in seinem Weg in nachteiliger Weise verändert.

Fig. 7 zeigt ein zweites Ausführungsbeispiel eines Ausschnitts eines Rotors 20 einer erfindungsgemäßen elektrischen Antriebsmaschine, welches auf der in Verbindung mit Fig. 2 beschriebenen Variante beruht. Bei diesem Ausführungsbeispiel ist jeweils eine Magnetfluss-Beeinflussungs-Gruppe 30, 31 zwischen den ersten Magneten 24-1, 25-1 der ersten und zweiten Magnetlage L1, L2 sowie der zweiten Magneten 24-2, 25-2 der ersten und zweiten Magnetlage L1, L2 vorgesehen. Jede der Magnetfluss-Beeinflussungs-Gruppen 30, 31 weist in der Figur lediglich beispielhaft zwei unterschiedlich lange, parallel zueinander angeordnete Luft-gefüllte Aussparungen 32-1, 32-2 bzw. 33-1, 33-2 auf. Die Aussparungen 32-1, 32-2 bzw. 33-1, 33-2 der Gruppe 31 sind im Wesentlichen parallel zu der benachbarten q-Achse orientiert, was der V-förmigen Anordnung der ersten und zweiten Magnete der jeweiligen Magnetlagen L1, L2 geschuldet ist. Auch in diesem Ausführungsbeispiel ragen erste Enden der jeweiligen Aussparungen an die Außenumfangsfläche 35 des Rotors 20 heran.

## Patentansprüche

1. Elektrische Antriebsmaschine (1) für ein Fahrzeug, insbesondere ein Kraftfahrzeug, umfassend einen Stator (10) und einen Rotor (20) mit zumindest einem Polpaar (21, 22), wobei jeder Pol (21a, 22a) eines jeweiligen Polpaars (21, 22) eine Magnetanordnung (23) mit zumindest einer vergrabenen Magnetlage (L1, L2) umfasst, wobei in jedem Pol (21a, 22a) eine Anzahl an Magnetfluss-Beeinflussungs-Gruppen (30, 31) mit jeweils einer Anzahl an Luft-gefüllten Aussparungen (32-1, 32-2, 32-3; 33-1, 33-2, 33-3) vorgesehen ist welche keinem Magnet (24, 25; 24-1, 24-2,25-1, 25-2) einer jeweiligen Magnetlage (L1, L2) zwecks Flussleitung zugeordnet sind,
**dadurch gekennzeichnet, dass**
eine Magnetlage (L1, L2) der Magnetanordnung (23) eines ersten Pols (21a, 22a) zumindest abschnittsweise an einen zweiten Pol (21a, 22a) angrenzt, wobei jeweils eine Magnetfluss-Beeinflussungs-Gruppe (30, 31) zwischen dieser Magnetlage (L1, L2) und dem zweiten Pol (21 a, 22a) vorgesehen ist.

2. Antriebsmaschine nach Anspruch 1, **dadurch gekennzeichnet, dass** die Anzahl an Luft-gefüllten Aussparungen (32-1, 32-2, 32-3; 33-1, 33-2, 33-3) schlitzförmig ausgebildet ist.

3. Antriebsmaschine nach Anspruch 1 oder 2, **dadurch gekennzeichnet, dass** die Anzahl an Luft-gefüllten Aussparungen (32-1, 32-2, 32-3; 33-1, 33-2, 33-3) ein ers tes Ende aufweist, das jeweils benachbart zu einer Außenumfangsfläche (35) des Rotors (20) angeordnet ist.

4. Antriebsmaschine nach Anspruch 3, **dadurch gekennzeichnet, dass** der Abstand der ersten Enden derer jeweiligen Luft-gefüllten Aussparungen (32-1, 32-2, 32-3; 33-1, 33-2, 33-3) zu der Außenumfangsfläche (35) des Rotors (20) in etwa gleich ist.

5. Antriebsmaschine nach Anspruch 3, **dadurch gekennzeichnet, dass** zumindest manche der ersten Enden einer jeweiligen Luft-gefüllten Aussparung (32-1, 32-2, 32-3; 33-1, 33-2, 33-3) an die Außenumfangsfläche (35) des Rotors (20) angrenzen.

6. Antriebsmaschine nach einem der vorhergehenden Ansprüche, **dadurch gekennzeichnet, dass** die Luft-gefüllten Aussparungen (32-1, 32-2, 32-3; 33-1, 33-2, 33-3) ein zweites Ende aufweisen, das in Richtung einer d-Achse des jeweiligen Pols orientiert ist.

7. Antriebsmaschine nach einem der vorhergehenden Ansprüche, **dadurch gekennzeichnet, dass** die Anzahl an Luft-gefüllten Aussparungen (32-1, 32-2, 32-3; 33-1, 33-2, 33-3) einer Magnetfluss-Beeinflussungs-Gruppe (30, 31) parallel angeordnet ist.

8. Antriebsmaschine nach einem der Ansprüche 1 bis 6, **dadurch gekennzeichnet, dass** die Anzahl an Luft-gefüllten Aussparungen (32-1, 32-2, 32-3; 33-1, 33-2, 33-3) einer Magnetfluss-Beeinflussungs-Gruppe (30, 31) in einem Winkel zueinander angeordnet ist.

9. Antriebsmaschine nach einem der vorhergehenden Ansprüche, **dadurch gekennzeichnet, dass** die Anzahl an Luft-gefüllten Aussparungen (32-1, 32-2, 32-3; 33-1, 33-2, 33-3) einer Magnetfluss-Beeinflussungs-Gruppe (30, 31) eine gleiche Länge aufweist.

10. Antriebsmaschine nach einem der Ansprüche 1 bis 8, **dadurch gekennzeichnet, dass** die Anzahl an Luft-gefüllten Aussparungen (32-1, 32-2, 32-3; 33-1, 33-2, 33-3) einer Magnetfluss-Beeinflussungs-Gruppe (30, 31) eine unterschiedliche Länge aufweist.

11. Antriebsmaschine nach einem der vorhergehenden Ansprüche, **dadurch gekennzeichnet, dass** bei einer Mehrzahl an radial übereinander angeordneten Magnetlagen (L1, L2) in einem Pol (21a, 22a) zwischen zwei Magnetlage (L1, L2) und benachbart zu der Außenumfangsfläche (35) des Rotors (20) jeweils eine der Magnetfluss-Beeinflussungs-Gruppen (30, 31) angeordnet ist.

12. Antriebsmaschine nach einem der vorhergehenden Ansprüche, **dadurch gekennzeichnet, dass** an den gegenüberliegenden Enden eines Magneten (24, 25) einer Magnetlage (L1, L2) jeweils eine Luftkaverne (26, 27; 28, 29) zur Flussleitung angeordnet ist, wobei eine jeweilige Magnetfluss-Beeinflussungs-Gruppe (30, 31) zwischen den Luftkavernen (26, 27; 28, 29) zweier übereinander angeordneter Magnetlage (L1, L2) angeordnet ist.

13. Antriebsmaschine nach einem der Ansprüche 1 bis 10, **dadurch gekennzeichnet, dass** ein erster und ein zweiter Magnet (24-1, 24-2, 25-1, 25-2) einer jeweiligen Magnetlage (L1, L2) in V-Form in dem Rotor (20) angeordnet sind, wobei eine jeweilige Magnetfluss-Beeinflussungs-Gruppe (30, 31) zwischen den ersten Magneten (24-1, 25-1) zweier über einander angeordneter Magnetlagen (L1, L2) und zwischen den zweiten Magneten (24-2, 25-2) der zwei übereinander angeordneten Magnetlage (L1, L2) angeordnet ist.

14. Antriebsmaschine nach einem der vorhergehenden Ansprüche, **dadurch gekennzeichnet, dass** diese eine permanenterregte Synchronmaschine ist.

## Claims

1. An electrical drive machine (1) for a vehicle, more especially a motor vehicle, comprising a stator (10) and a rotor (20) having at least one pole pair (21, 22), wherein each pole (21 a, 22a) of each pole pair (21, 22) comprises a magnet arrangement (23) having at least one buried magnetic layer (L1, L2), wherein there is provided in each pole (21a, 22a) a number of magnetic flux influencing groups (30, 31), each having a number of air-filled recesses (32-1, 32-2, 32-3; 33-1, 33-2, 33-3), which are not associated with any magnet (24, 25; 24-1, 24-2, 25-1, 25-2) of any magnetic layer (L1, L2) for the purpose of flux guidance,
**characterised in that**
a magnetic layer (L1, L2) of the magnet arrangement (23) of a first pole (21 a, 22a) borders on a second pole (21 a, 22a) at least in part, wherein in each case a magnetic flux influencing group (30, 31) is provided between this magnetic layer (L1, L2) and the second pole (21 a, 22a).

2. A drive machine according to claim 1, **characterised in that** the number of air-filled recesses (32-1, 32-2, 32-3; 33-1, 33-2, 33-3) are formed in a slot-shaped manner.

3. A drive machine according to claim 1 or claim 2, **characterised in that** the number of air-filled recesses (32-1, 32-2, 32-3; 33-1, 33-2, 33-3) have a first end, which in each case is arranged adjacently to an outer peripheral surface (35) of the rotor (20).

4. A drive machine according to claim 3, **characterised in that** the distance between the first ends of the respective air-filled recesses (32-1, 32-2, 32-3; 33-1, 33-2, 33-3) and the outer peripheral surface (35) of the rotor (20) is approximately identical.

5. A drive machine according to claim 3, **characterised in that** at least some of the first ends of the respective air-filled recesses (32-1, 32-2, 32-3; 33-1, 33-2, 33-3) border on the outer peripheral surface (35) of the rotor (20).

6. A drive machine according to any one of the preceding claims, **characterised in that** the air-filled recesses (32-1, 32-2, 32-3; 33-1, 33-2, 33-3) have a second end, which is oriented in the direction of a d-axis of the corresponding pole.

7. A drive machine according to any one of the preceding claims, **characterised in that** the number of air-filled recesses (32-1, 32-2, 32-3; 33-1, 33-2, 33-3) of a magnetic flux influencing group (30, 31) are arranged in parallel.

8. A drive machine according to any one of claims 1 to 6, **characterised in that** the number of air-filled recesses (32-1, 32-2, 32-3; 33-1, 33-2, 33-3) of a magnetic flux influencing group (30, 31) are arranged at an angle to one another.

9. A drive machine according to any one of the preceding claims, **characterised in that** the number of air-filled recesses (32-1, 32-2, 32-3; 33-1, 33-2, 33-3) of a magnetic flux influencing group (30, 31) have the same length.

10. A drive machine according to any one of claims 1 to 8, **characterised in that** the number of air-filled recesses (32-1, 32-2, 32-3; 33-1, 33-2, 33-3) of a magnetic flux influencing group (30, 31) have different lengths.

11. A drive machine according to any one of the preceding claims, **characterised in that**, with a plurality of magnetic layers (L1, L2) arranged radially one above the other, one of the magnetic flux influencing groups (30, 31) is arranged in each case in a pole (21 a, 22a) between two magnetic layers (L1, L2) and adjacently to the outer peripheral surface (35) of the rotor (20).

12. A drive machine according to any one of the preceding claims, **characterised in that** an air cavern (26, 27; 28, 29) for flux guidance is arranged at each of the opposite ends of a magnet (24, 25) of a magnetic layer (L1, L2), wherein a separate magnetic flux influencing group (30, 31) is arranged between the air caverns (26, 27; 28, 29) of each two magnetic layers (L1, L2) arranged one above the other.

13. A drive machine according to any one of claims 1 to 10, **characterised in that** a first magnet and a second magnet (24-1, 24-2, 25-1, 25-2) of each magnetic layer (L1, L2) are arranged in a V-shape in the rotor (20), wherein a separate magnetic flux influencing group (30, 31) is arranged between the first magnets (24-1, 25-1) of two magnetic layers (L1, L2) arranged one above the other and between the second magnets (24-2, 25-2) of the two magnetic layers (L1, L2) arranged one above the other.

14. A drive machine according to any one of the preceding claims, **characterised in that** this is a permanently excited synchronous machine.

## Revendications

1. Moteur d'entraînement électrique (1) d'un véhicule, en particulier d'un véhicule automobile comprenant un stator (10) et un rotor (20) ayant au moins une paire de pôles (21, 22), chaque pôle (21a, 22a) d'une paire de pôles (21, 22) respective comprenant un dispositif d'aimants (23) ayant au moins une couche d'aimants enfoncés (L1, L2), dans chacun des pôles (21a, 22a) étant prévu un ensemble de groupes (30, 31) influençant le flux magnétique ayant chacun un ensemble d'évidements (32-1, 32-2, 32-3, 33-1, 33-2, 33-3) remplis d'air qui ne sont associés à aucun aimant (24, 25, 24-1, 24-2, 25-1, 25-2) d'une couche d'aimants (L1, L2) respective pour permettre la conduction du flux,
**caractérisé en ce qu'**
une couche d'aimants (L1, L2) du dispositif d'aimants (23) d'un premier pôle (21a, 22a) est contigüe au moins par segments à un second pôle (21a, 22a), et un groupe influençant le flux magnétique (30, 31) respectif est situé entre cette couche d'aimants (L1, L2) et le second pôle (21a, 22a).

2. Moteur d'entraînement conforme à la revendication 1,
**caractérisé en ce que**
les évidements de l'ensemble d'évidements remplis d'air (32-1, 32-2, 32-3, 331, 33-2, 33-3) sont en forme de fentes.

3. Moteur d'entraînement conforme à la revendication 1 ou 2, **caractérisé en ce que**
les évidements de l'ensemble d'évidements remplis d'air (32-1, 32-2, 32-3, 33-1, 33-2, 33-3) ont une première extrémité qui est respectivement située au voisinage de la surface périphérique externe (35) du rotor (20).

4. Moteur d'entraînement conforme à la revendication 3,
**caractérisé en ce que**
les distances des premières extrémités des évidements remplis d'air respectifs (32-1, 32-2, 32-3, 33-1, 33-2, 33-3) de la surface périphérique externe (35) du rotor (20) sont approximativement égales.

5. Moteur d'entraînement conforme à la revendication 3,
**caractérisé en ce qu'**
au moins certaines des premières extrémités des évidements remplis d'air respectifs (32-1, 32-2, 32-3, 33-1, 33-2, 33-3) sont contigües à la surface périphérique externe (35) du rotor (20).

6. Moteur d'entraînement conforme à l'une des revendications précédentes,
**caractérisé en ce que**
les évidements remplis d'air (32-1, 32-2, 32-3, 33-1, 33-2, 33-3) ont une seconde extrémité qui est orientée en direction de l'axe d du pôle respectif.

7. Moteur d'entraînement conforme à l'une des revendications précédentes,
**caractérisé en ce que**
les évidements de l'ensemble d'évidements remplis d'air (32-1, 32-2, 32-3, 33-1, 33-2, 33-3) d'un groupe influençant le flux magnétique (30, 31) sont parallèles.

8. Moteur d'entraînement conforme à l'une des revendications 1 à 6,
**caractérisé en ce que**
les évidements de l'ensemble d'évidements remplis d'air (32-1, 32-2, 32-3, 33-1, 33-2, 33-3) d'un groupe influençant le flux magnétique (30, 31) sont orientés angulairement les uns par rapport aux autres.

9. Moteur d'entraînement conforme à l'une des revendications précédentes,
**caractérisé en ce que**
les évidements de l'ensemble d'évidements remplis d'air (32-1, 32-2, 32-3, 33-1, 33-2, 33-3) d'un groupe influençant le flux magnétique (30, 31) ont la même longueur.

10. Moteur d'entraînement conforme à l'une des revendications 1 à 8,
**caractérisé en ce que**
les évidements de l'ensemble d'évidements remplis d'air (32-1, 32-2, 32-3, 33-1, 33-2, 33-3) d'un groupe influençant le flux magnétique (30, 31) ont des longueurs différentes.

11. Moteur d'entraînement conforme à l'une des revendications précédentes,
**caractérisé en ce que**
dans le cas d'un ensemble de couches d'aimants situées radialement les unes sur les autres (L1, L2), dans un pôle (21a, 22a), l'un des groupes (30, 31) influençant le flux magnétique est respectivement installé entre deux couches magnétiques (L1, L2) et au voisinage de la surface périphérique externe (35) du rotor (20).

12. Moteur d'entraînement conforme à l'une des revendications précédentes,
**caractérisé en ce que**
sur les extrémités opposées d'un aimant (24, 25) d'une couche d'aimants (L1, L2) est respectivement installée une cavité d'air (26, 27, 28, 29) permettant la conduction du flux, un groupe (30, 31) influençant le flux magnétique respectif étant installé entre les cavités d'air (26, 27, 28, 29) de deux couches d'aimants (L1, L2) situées l'une sur l'autre.

13. Moteur d'entraînement conforme à l'une des revendications 1 à 10,
**caractérisé en ce qu'**
un premier et un second aimants (24-1, 24-2, 25-1, 25-2) de chaque couche d'aimants (L1, L2) sont disposés en forme de V dans le rotor (20), et un groupe (30, 31) influençant le flux magnétique est respectivement installé entre les premiers aimants (24-1, 25-1) de deux couches d'aimants (L1, L2) situées l'une sur l'autre et entre les seconds aimants (24-2, 25-2) de deux couches d'aimants (L1, L2) situées l'une sur l'autre.

14. Moteur d'entraînement conforme à l'une des revendications précédentes,
**caractérisé en ce qu'**
il est constitué par un moteur synchrone à excitation permanente.
